# EUROPÄISCHE PATENTANMELDUNG

(11) **EP 3 736 876 A1**
(43) Veröffentlichungstag der Anmeldung: **11.11.2020**
(21) Anmeldenummer: 19173776.6
(22) Anmeldetag: 10.05.2019
(51) Int. Cl.: H01M 2/04, H01M 2/10, H01M 2/20, H01M 2/32, H01M 2/34, H01M 2/12, B25F 5/02

(54) **AKKUPACK, BEARBEITUNGSSYSTEM UND VERFAHREN ZUR HERSTELLUNG EINES AKKUPACKS**

(71) Anmelder: Andreas Stihl AG & Co. KG, 71336 Waiblingen (DE)
(72) Erfinder: KOLB, Joachim, 71638 Ludwigsburg (DE)
(74) Vertreter: Patentanwälte Ruff, Wilhelm, Beier, Dauster & Partner mbB

(57) **Zusammenfassung**

Die Erfindung bezieht sich auf einen Akkupack (1) zur Versorgung eines elektrisch angetriebenen Bearbeitungsgeräts (101) mit elektrischer Antriebsleistung (AL), wobei der Akkupack (1) aufweist:
- mehrere Akkumulatorzellen (21), wobei die Akkumulatorzellen (21) jeweils Zellkontakte (22) aufweisen,
- ein Gehäuse (80), wobei die Akkumulatorzellen (21) innerhalb des Gehäuses (80) angeordnet sind, und
- eine Vergussmasse (90), wobei die Vergussmasse (90) die Zellkontakte (22) vor Kontakt mit Wasser von außerhalb des Gehäuses (80) schützt,
- dadurch gekennzeichnet,
- dass das Gehäuse (80) ein Gehäuseoberteil (81) und ein Gehäuseunterteil (82) aufweist, wobei das Gehäuseunterteil (82) das Gehäuseoberteil (81) derart überlappt, dass das Gehäuseoberteil (81) einen Außenbereich (82A) und einen Innenbereich (82I) des Gehäuseunterteils (82) für die Vergussmasse (90) definiert, wobei ein Gießspiegel (H90A) der Vergussmasse (90) in dem Außenbereich (82A) oberhalb eines Gießspiegels (H90I) der Vergussmasse (90) in dem Innenbereich (82I) ist.

## Beschreibung

### ANWENDUNGSGEBIET UND STAND DER TECHNIK

Die Erfindung bezieht sich auf einen Akkupack zur Versorgung eines elektrisch angetriebenen Bearbeitungsgeräts mit elektrischer Antriebsleistung, auf ein Bearbeitungssystem aufweisend einen solchen Akkupack und ein elektrisch angetriebenes Bearbeitungsgerät und auf ein Verfahren zur Herstellung eines Akkupacks zur Versorgung eines elektrisch angetriebenen Bearbeitungsgeräts mit elektrischer Antriebsleistung.

### AUFGABE UND LÖSUNG

Der Erfindung liegt als Aufgabe die Bereitstellung eines Akkupacks zur Versorgung eines elektrisch angetriebenen Bearbeitungsgeräts mit elektrischer Antriebsleistung, eines Bearbeitungssystems aufweisend einen solchen Akkupack und ein elektrisch angetriebenes Bearbeitungsgerät und eines Verfahrens zur Herstellung eines Akkupacks zur Versorgung eines elektrisch angetriebenen Bearbeitungsgeräts mit elektrischer Antriebsleistung, wobei der Akkupack und das Verfahren jeweils verbesserte Eigenschaften aufweisen, zugrunde.

Die Erfindung löst die Aufgabe durch die Bereitstellung eines Akkupacks mit den Merkmalen des Anspruchs 1, eines Bearbeitungssystems mit den Merkmalen des Anspruchs 14 und eines Verfahrens mit den Merkmalen des Anspruchs 15. Vorteilhafte Weiterbildungen und/oder Ausgestaltungen der Erfindung sind in den abhängigen Ansprüchen beschrieben.

Der erfindungsgemäße Akkupack ist zur, insbesondere automatischen, Versorgung eines elektrisch angetriebenen Bearbeitungsgeräts, insbesondere Garten-, Forst- und/oder Baubearbeitungsgeräts, mit elektrischer Antriebsleistung ausgebildet bzw. konfiguriert. Der Akkupack weist mehrere Akkumulatorzellen, ein Gehäuse und eine Vergussmasse auf. Insbesondere alle, die Akkumulatorzellen weisen jeweils Zellkontakte auf. Des Weiteren sind, insbesondere alle, die Akkumulatorzellen innerhalb des Gehäuses angeordnet. Die Vergussmasse schützt, insbesondere alle, die Zellkontakte vor Kontakt mit Wasser, insbesondere Wassertropfen, von außerhalb des Gehäuses. Das Gehäuse weist ein Gehäuseoberteil und ein Gehäuseunterteil auf. Das Gehäuseunterteil überlappt bzw. überdeckt das Gehäuseoberteil derart, dass das Gehäuseoberteil einen Außenbereich und einen Innenbereich des Gehäuseunterteils für die Vergussmasse definiert. Ein Gießspiegel bzw. eine Füllhöhe der Vergussmasse in dem Außenbereich ist oberhalb eines Gießspiegels bzw. eine Füllhöhe der Vergussmasse in dem Innenbereich.

Dies ermöglicht einen Verguss bzw. eine Abdichtung und/oder eine Versiegelung des Gehäuses, insbesondere einer Überlappungs-, Trenn- bzw. Schnittstelle zwischen dem Gehäuseoberteil und dem Gehäuseunterteil, und/oder eine mechanische Verbindung des Gehäuseoberteils und des Gehäuseunterteils miteinander. Zusätzlich oder alternativ ermöglicht dies ein relativ einfaches Entweichen von Luft aus dem Gehäuseunterteil, insbesondere dem Außenbereich, nach außen, insbesondere nach oben, heraus während eines Zuführens von der Vergussmasse in das Gehäuse, insbesondere das Gehäuseunterteil, hinein. Somit ermöglicht dies eine relativ einfache Herstellung des Akkupacks.

Insbesondere können die Akkumulatorzellen zur Versorgung des Bearbeitungsgeräts mit der Antriebsleistung ausgebildet sein. Zusätzlich oder alternativ können die Akkumulatorzellen jeweils einzelne wiederaufladbare Speicherelemente für elektrische Energie auf elektrochemischer Basis sein. Insbesondere können die Akkumulatorzellen Lithium-Ionen-Akkumulatorzellen sein. Weiter zusätzlich oder alternativ können die Akkumulatorzellen elektrisch zusammengeschaltet sein, insbesondere parallel oder seriell geschaltet sein. Insbesondere können die Zellkontakte, insbesondere jeweils, nächster Akkumulatorzellen miteinander elektrisch verbunden sein. Weiter zusätzlich oder alternativ können die Akkumulatorzellen gleich, insbesondere typ- und/oder baugleich, sein. Weiter zusätzlich oder alternativ können die Zellkontakte als Terminals, Pole oder Anschluss-Elektroden bezeichnet werden. Weiter zusätzlich oder alternativ können die Zellkontakte spannungsführend sein, insbesondere spannungsführende Oberflächen aufweisen.

Das Gehäuse kann, insbesondere können/kann das Gehäuseoberteil und/oder das Gehäuseunterteil, die Zellkontakte vor Kontakt mit Wasser von außerhalb des Gehäuses schützen. Zusätzlich oder alternativ können zeitlich vor einem Anordnen das Gehäuseoberteil und das Gehäuseunterteil zum Anordnen der Akkumulatorzellen innerhalb des Gehäuses voneinander entfernt sein bzw. das Gehäuseunterteil braucht oder kann das Gehäuseoberteil nicht überlappen. Weiter zusätzlich oder alternativ, insbesondere zeitlich nach dem Anordnen, kann das Gehäuseoberteil oberhalb des Gehäuseunterteils angeordnet sein. Weiter zusätzlich oder alternativ können das Gehäuseoberteil und das Gehäuseunterteil, insbesondere in einer vertikalen Richtung, aneinander anschließen bzw. sich berühren. Weiter zusätzlich oder alternativ kann das Gehäuseunterteil das Gehäuseoberteil in einer vertikalen Richtung und/oder außen- bzw. umfangsseitig überlappen. Weiter zusätzlich oder alternativ kann ausgehend von dem Innenbereich in, insbesondere horizontaler, Richtung nach außen der Außenbereich angeordnet sein. Weiter zusätzlich oder alternativ kann der Außenbereich zwischen einer Innenseite des Gehäuseunterteils und einer Außenseite des Gehäuseoberteils, insbesondere definiert, sein. Insbesondere kann das Gehäuseunterteil mit der Innenseite zu der Außenseite des Gehäuseoberteils beabstandet sein. Weiter zusätzlich oder alternativ kann der Innenbereich zwischen Innenseiten des Gehäuseoberteils, insbesondere definiert, sein. Weiter zusätzlich oder alternativ kann der Außenbereich eine, insbesondere geschlossene, Ringform aufweisen. Weiter zusätzlich oder alternativ kann der Gießspiegel der Vergussmasse in dem Außenbereich einem dem Gehäuseunterteil entfernten bzw. oberen Ende des Gehäuseoberteils näher als der Gießspiegel der Vergussmasse in dem Innenbereich sein. Weiter zusätzlich oder alternativ kann der Gießspiegel der Vergussmasse in dem Innenbereich einem dem Gehäuseoberteil entfernten bzw. unteren Ende des Gehäuseunterteils näher als der Gießspiegel der Vergussmasse in dem Außenbereich sein. Weiter zusätzlich oder alternativ kann das Gehäuseunterteil als Gießform für die Vergussmasse ausgebildet sein.

Die Vergussmasse kann innerhalb des Gehäuseunterteils angeordnet sein. Zusätzlich oder alternativ kann die Vergussmasse elektrisch isolierend und/oder wärmeleitfähig sein. Weiter zusätzlich oder alternativ kann die Vergussmasse ein Gießharz, insbesondere ein Kunstharz, sein. Weiter zusätzlich oder alternativ kann die Vergussmasse in einem festen Zustand sein.

Der Akkupack kann, insbesondere die Akkumulatorzellen können, eine maximale elektrische Antriebsleistung von minimal 1 Kilowatt (kW), insbesondere von minimal 2 kW, und/oder von maximal 10 kW, insbesondere von maximal 5 kW, insbesondere von 3 kW, aufweisen. Zusätzlich oder alternativ kann der Akkupack, insbesondere können die Akkumulatorzellen, eine Nennspannung von minimal 10 Volt (V), insbesondere von minimal 20 V, und/oder von maximal 100 V, insbesondere von maximal 50 V, insbesondere von 36 V, aufweisen. Weiter zusätzlich oder alternativ kann der Akkupack, insbesondere können die Akkumulatorzellen, einen maximalen Energieinhalt von minimal 100 Wattstunden (Wh), insbesondere von minimal 200 Wh, und/oder von maximal 4000 Wh, insbesondere von maximal 2000 Wh, insbesondere von maximal 1000 Wh, insbesondere von maximal 500 Wh, insbesondere von 337 Wh, aufweisen.

In einer Weiterbildung der Erfindung weist das Gehäuse, insbesondere das Gehäuseunterteil, eine Zufuhröffnung auf. Die Zufuhröffnung ist zum Zuführen von der Vergussmasse in das Gehäuse, insbesondere das Gehäuseunterteil, hinein ausgebildet bzw. konfiguriert. Des Weiteren ist die Zufuhröffnung unterhalb des Gießspiegels der Vergussmasse, insbesondere in dem Innenbereich, insbesondere angeordnet. Dies ermöglicht das Zuführen bzw. Aufsteigen von der Vergussmasse in dem Gehäuse, insbesondere dem Gehäuseunterteil, mindestens zeitweise entgegen der Schwerkraft bzw. von unten nach oben. Somit ermöglicht dies eine Reduzierung oder sogar eine Vermeidung von Lufteinschlüssen bzw. Blasen innerhalb der Vergussmasse. Insbesondere kann die Vergussmasse bis zu der Zufuhröffnung hinreichen, insbesondere nach unten.

In einer Ausgestaltung der Erfindung ist die Zufuhröffnung an einer Unterseite, insbesondere an einer untersten Stelle, des Gehäuses, insbesondere des Gehäuseunterteils, angeordnet. Insbesondere kann die Vergussmasse bis zu der Unterseite hinreichen, insbesondere nach unten. Zusätzlich oder alternativ kann die Zufuhröffnung an einem dem Gehäuseoberteil entfernten bzw. unteren Ende des Gehäuseunterteils angeordnet sein.

In einer Ausgestaltung der Erfindung weist der Akkupack mindestens einen Verschlusskörper auf. Der mindestens eine Verschlusskörper ist zum Verschließen der Zufuhröffnung ausgebildet bzw. konfiguriert, insbesondere verschließt die Zufuhröffnung. Dies ermöglicht ein Fließen der, insbesondere flüssigen, Vergussmasse, insbesondere zeitlich nach dem Zuführen und/oder zeitlich vor einem Verfestigen bzw. Aushärten, aus dem Gehäuse, insbesondere dem Gehäuseunterteil, heraus zu vermeiden bzw. zu verhindern. Dies ermöglicht ein Ausführen eines nachfolgenden Herstellungsschritts zeitlich direkt nach dem Verschließen, insbesondere ohne Wartezeitdauer. Insbesondere kann der Verschlusskörper die Zuführöffnung dauerhaft verschließen bzw. dauerhaft an dem Akkupack, insbesondere in der Zuführöffnung, verbleiben bzw. braucht oder kann nicht von der Zuführöffnung entfernt sein oder werden.

In einer Ausgestaltung der Erfindung weist der Akkupack ein Zufuhrventil auf. Das Zufuhrventil weist die Zufuhröffnung und den mindestens einen Verschlusskörper auf. Insbesondere kann das Zufuhrventil ein selbstverschließendes Ventil, insbesondere ein Membranventil, sein. Das Membranventil kann ein Hindurchführen einer Düse ermöglichen, welche die Vergussmasse in das Gehäuse, insbesondere das Gehäuseunterteil, zuführen bzw. einbringen kann. Zusätzlich oder alternativ kann das Membranventil sich zeitlich nach dem Zuführen und einem Entfernen der Düse selbst verschließen.

In einer Weiterbildung der Erfindung weisen, insbesondere alle, die Akkumulatorzellen jeweils eine Gasablassstelle, insbesondere ein Sicherheitsventil, auf. Insbesondere alle, die Gasablassstellen sind, insbesondere innerhalb des Gehäuseoberteils, oberhalb des Gießspiegels der Vergussmasse, insbesondere in dem Innenbereich, insbesondere angeordnet. Dies ermöglicht, dass die Gasablassstellen nicht durch die Vergussmasse eingeschlossen sein können. Dies ermöglicht eine bestimmungsgemäße Funktion der Gasablassstellen. Dies ermöglicht einen Schaden klein zu halten, insbesondere auch wenn die Akkumulatorzellen einen relativ hohen Energieinhalt aufweisen können. Insbesondere können die Gasablassstellen, insbesondere jeweils, ein Ablassen von Gas von innen bzw. innerhalb der Akkumulatorzelle nach außen bzw. außerhalb der Akkumulatorzelle ermöglichen, insbesondere wenn ein Druck von Gas erzeugt durch eine elektrochemische Reaktion stattfindend in bzw. innerhalb der Akkumulatorzelle einen vorbestimmten Grenzdruck überschreiten kann. Weiter zusätzlich kann ein Zellkontakt einer jeweiligen der Akkumulatorzellen die Gasablassstelle aufweisen.

In einer Weiterbildung der Erfindung sind die Akkumulatorzellen vollständig, insbesondere innerhalb des Gehäuseoberteils, oberhalb des Gießspiegels der Vergussmasse, insbesondere in dem Innenbereich, insbesondere angeordnet. Dies ermöglicht, dass die Akkumulatorzellen nicht durch die Vergussmasse eingeschlossen sein können.

In einer Weiterbildung der Erfindung sind, insbesondere alle, die Akkumulatorzellen, insbesondere längliche, Rundzellen. Insbesondere kann eine, insbesondere jeweilige, Länge der Rundzellen größer als ein, insbesondere jeweiliger, Durchmesser der Rundzellen sein. Zusätzlich oder alternativ kann ein Zellkontakt einer jeweiligen der Rundzellen die Gasablassstelle, soweit vorhanden, aufweisen.

Zusätzlich oder alternativ können, insbesondere alle, die Akkumulatorzellen Pouchzellen sein und, insbesondere alle, die Zellkontakte können Zelltabs sein. Insbesondere können die Pouchzellen Flachzellen sein. Zusätzlich oder alternativ können die Zelltabs als Kontaktfahnen bezeichnet werden. Weiter zusätzlich oder alternativ können, insbesondere alle, die Zelltabs, insbesondere vollständig, innerhalb des Gehäuseunterteils angeordnet sein. Weiter zusätzlich oder alternativ können, insbesondere alle, die Zelltabs, insbesondere vollständig, unterhalb des Gießspiegels der Vergussmasse, insbesondere in dem Innenbereich, angeordnet sein und, insbesondere vollständig, durch die Vergussmasse eingeschlossen sein. Weiter zusätzlich oder alternativ können die Pouchzellen Zellhüllen aufweisen. Insbesondere alle, die Zellhüllen können, insbesondere innerhalb des Gehäuseoberteils, oberhalb des Gießspiegels der Vergussmasse, insbesondere in dem Innenbereich, angeordnet sein. Weiter zusätzlich oder alternativ kann die Vergussmasse mindestens bis zu, insbesondere allen, den Zellhüllen hinreichen, insbesondere nach oben. Weiter zusätzlich oder alternativ können die Zellhüllen teilweise nicht durch die Vergussmasse eingeschlossen sein, insbesondere dass aus den Gasablassstellen der Zellhüllen Gas entweichen kann.

Weiter zusätzlich oder alternativ können, insbesondere alle, die Akkumulatorzellen prismatische Zellen sein.

In einer Weiterbildung der Erfindung ist das Gehäuseoberteil, insbesondere eine Wand des Gehäuseoberteils, gasdicht, insbesondere für mindestens eine Verfestigungs- bzw. Aushärtezeitdauer der Vergussmasse. Dies ermöglicht ein Entweichen von Luft aus dem Gehäuseoberteil nach außen, insbesondere nach oben, heraus während des Zuführens von der Vergussmasse in das Gehäuse, insbesondere das Gehäuseunterteil, hinein zu vermeiden bzw. zu verhindern. Somit ermöglicht dies ein Aufsteigen von der Vergussmasse in dem Gehäuseoberteil entgegen der Schwerkraft bzw. von unten nach oben zu vermeiden bzw. zu verhindern. Somit ermöglicht dies, dass der Gießspiegel der Vergussmasse in dem Innenbereich unterhalb des Gießspiegels der Vergussmasse in dem Außenbereich ist. Insbesondere kann die Wand des Gehäuseoberteils die Zellkontakte vor Kontakt mit Wasser von außerhalb des Gehäuses schützen.

In einer Weiterbildung der Erfindung ist eine Öffnung des Gehäuseoberteils dem Gehäuseunterteil zugewandt.

Zusätzlich oder alternativ ist eine Öffnung des Gehäuseunterteils dem Gehäuseoberteil zugewandt.

Zusätzlich oder alternativ sind das Gehäuseoberteil und das Gehäuseunterteil durcheinander verschlossen.

Zusätzlich oder alternativ reicht die Vergussmasse in dem Innenbereich bis zu einem dem Gehäuseunterteil benachbarten bzw. nahen bzw. unteren Ende des Gehäuseoberteils hin, und insbesondere nicht bis oberhalb.

Zusätzlich oder alternativ reicht die Vergussmasse in dem Außenbereich bis oberhalb eines, insbesondere des, dem Gehäuseunterteil benachbarten bzw. nahen bzw. unteren Endes des Gehäuseoberteils hin, insbesondere bis zu einem dem Gehäuseoberteil benachbarten bzw. nahen bzw. oberen Ende des Gehäuseunterteils.

Insbesondere kann die Öffnung des Gehäuseoberteils durch die Wand, insbesondere einen Rand der Wand, und/oder das benachbarte Ende des Gehäuseoberteils definiert sein. Zusätzlich oder alternativ kann die Öffnung des Gehäuseunterteils durch eine Wand, insbesondere einen Rand der Wand, und/oder das benachbarte Ende des Gehäuseunterteils definiert sein. Weiter zusätzlich oder alternativ kann das benachbarte Ende des Gehäuseoberteils den Gießspiegel der Vergussmasse in dem Innenbereich definieren. Weiter zusätzlich oder alternativ kann das benachbarte Ende des Gehäuseunterteils den Gießspiegel der Vergussmasse in dem Außenbereich definieren.

In einer Weiterbildung der Erfindung bildet die Vergussmasse in dem Außenbereich und in dem Innenbereich, insbesondere nur, einen, insbesondere einzigen, Vergussblock. Dies ermöglicht einen besondere guten Verguss des Gehäuses, insbesondere der Überlappungs-, Trenn- bzw. Schnittstelle zwischen dem Gehäuseoberteil und dem Gehäuseunterteil, und/oder eine besonderes gute mechanische Verbindung des Gehäuseoberteils und des Gehäuseunterteils miteinander. Zusätzlich oder alternativ ermöglicht dies, dass die Vergussmasse in, insbesondere nur, einem, insbesondere einzigen, Herstellungsschritt zugeführt werden kann. Somit ermöglicht dies eine relativ einfache Herstellung des Akkupacks.

In einer Weiterbildung der Erfindung weist der Akkupack eine Mess- und/oder Leistungselektronik auf. Die Mess- und/oder Leistungselektronik ist mit mehreren, insbesondere allen, der Zellkontakte elektrisch verbunden. Des Weiteren ist die Mess- und/oder Leistungselektronik innerhalb des Gehäuses, insbesondere des Gehäuseunterteils, unterhalb des Gießspiegels der Vergussmasse, insbesondere in dem Innenbereich, insbesondere angeordnet. Dies ermöglicht einen Schutz der Mess- und/oder Leistungselektronik vor Kontakt mit Wasser von außerhalb des Gehäuses. Insbesondere kann die Mess- und/oder Leistungselektronik, insbesondere vollständig, durch die Vergussmasse eingeschlossen sein. Zusätzlich oder alternativ kann die Mess- und/oder Leistungselektronik spannungsführend sein, insbesondere spannungsführende Oberflächen aufweisen. Insbesondere kann die Mess- und/oder Leistungselektronik mindestens eine Leiterplatte aufweisen. Weiter zusätzlich oder alternativ kann die Mess- und/oder Leistungselektronik zur, insbesondere automatischen, Messung von Eigenschaften, insbesondere Spannungen, insbesondere aller, der Akkumulatorzellen ausgebildet sein. Dies kann ermöglichen sicherheitskritische Zustände der Akkumulatorzellen zu erfassen. Weiter zusätzlich oder alternativ kann die Mess- und/oder Leistungselektronik zur, insbesondere automatischen, Steuerung, insbesondere Beendigung, der Abgabe der elektrischen Antriebsleistung von dem Akkupack und/oder einer Aufnahme von elektrischer Ladeleistung durch den Akkupack, insbesondere in Abhängigkeit von den gemessenen Eigenschaften, ausgebildet sein. Dies kann ermöglichen sicherheitskritische Zustände der Akkumulatorzellen und somit des Akkupacks gering zu halten oder sogar ganz zu vermeiden.

In einer Weiterbildung der Erfindung weist der Akkupack mehrere Akkupackkontakte auf. Die Akkupackkontakte sind zur elektrischen Verbindung des Akkupacks und des Bearbeitungsgeräts miteinander zur Versorgung des Bearbeitungsgeräts mit der elektrischen Antriebsleistung von dem Akkupack ausgebildet bzw. konfiguriert. Des Weiteren sind, insbesondere alle, die Akkupackkontakte unterhalb des Gießspiegels der Vergussmasse, insbesondere in dem Innenbereich, angeordnet. Dies ermöglicht einen relativ einfachen und/oder kompakten Aufbau des Akkupacks. Insbesondere können die Akkupackkontakte an der Unterseite des Gehäuses, insbesondere des Gehäuseunterteils, angeordnet sein. Zusätzlich oder alternativ können die Akkupackkontakte an einem dem Gehäuseoberteil entfernten bzw. unteren Ende des Gehäuseunterteils angeordnet sein. Weiter zusätzlich oder alternativ können die Akkupackkontakte spannungsführend sein, insbesondere spannungsführende Oberflächen aufweisen.

Das erfindungsgemäße Bearbeitungssystem weist einen, insbesondere den, Akkupack wie zuvor beschrieben und ein, insbesondere das, elektrisch angetriebenes Bearbeitungsgerät auf. Der Akkupack und das Bearbeitungsgerät sind zur elektrischen Verbindung miteinander zur, insbesondere automatischen, Versorgung des Bearbeitungsgeräts mit elektrischer Antriebsleistung von dem Akkupack ausgebildet bzw. konfiguriert.

Insbesondere kann das Bearbeitungssystem ein Garten-, Forst- und/oder Baubearbeitungssystem sein. Zusätzlich oder alternativ kann das Bearbeitungsgerät ein Garten-, Forst- und/oder Baubearbeitungsgerät sein. Weiter zusätzlich oder alternativ kann das Bearbeitungsgerät ein handgeführtes, insbesondere bodengeführtes oder handgetragenes, Bearbeitungsgerät sein. Insbesondere handgeführtes, insbesondere handgetragenes, Bearbeitungsgerät kann bedeuten, dass das Bearbeitungsgerät eine maximale Masse von 50 Kilogramm (kg), insbesondere von 20 kg, insbesondere von 10 kg, aufweisen kann. Weiter zusätzlich oder alternativ kann das Bearbeitungsgerät einen Elektroantriebsmotor aufweisen. Weiter zusätzlich oder alternativ können der Akkupack und das Bearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können der Akkupack und das Bearbeitungsgerät zur, insbesondere lösbaren, insbesondere werkzeugfrei und/oder zerstörungsfrei lösbaren, mechanischen Verbindung miteinander ausgebildet sein. Insbesondere kann das Bearbeitungsgerät zum Tragen des Akkupacks ausgebildet sein.

In einer Weiterbildung der Erfindung weist das Bearbeitungsgerät eine Akkuaufnahme, insbesondere einen Akkuschacht, auf. Die Akkuaufnahme ist zum Aufnehmen des Akkupacks ausgebildet bzw. konfiguriert.

In einer Weiterbildung der Erfindung ist das Bearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

Das erfindungsgemäße Verfahren zur Herstellung eines, insbesondere des, Akkupacks, insbesondere wie zuvor beschrieben, zur Versorgung eines, insbesondere des, elektrisch angetriebenen Bearbeitungsgeräts mit elektrischer Antriebsleistung weist die Schritte auf:
a) Anordnen von, insbesondere den, mehreren Akkumulatorzellen, wobei die Akkumulatorzellen jeweils, insbesondere die, Zellkontakte aufweisen, innerhalb eines, insbesondere des, Gehäuses, wobei das Gehäuse ein, insbesondere das, Gehäuseoberteil und ein, insbesondere das, Gehäuseunterteil aufweist, wobei das Gehäuseunterteil das Gehäuseoberteil derart überlappt, dass das Gehäuseoberteil einen, insbesondere den, Außenbereich und einen, insbesondere den, Innenbereich des Gehäuseunterteils für eine, insbesondere die, Vergussmasse definiert. b) Zuführen von der Vergussmasse derart, dass ein, insbesondere der, Gießspiegel der Vergussmasse in dem Außenbereich oberhalb eines, insbesondere des, Gießspiegels der Vergussmasse in dem Innenbereich ist, dass die Vergussmasse die Zellkontakte vor Kontakt mit Wasser von außerhalb des Gehäuses schützt, insbesondere zeitlich nach dem Schritt a).

Zusätzlich oder alternativ a) Anordnen von, insbesondere den, mehreren Akkumulatorzellen, wobei die Akkumulatorzellen jeweils, insbesondere die, Zellkontakte aufweisen, innerhalb eines, insbesondere des, Gehäuses, wobei das Gehäuse eine, insbesondere die, Zufuhröffnung aufweist, wobei die Zufuhröffnung zum Zuführen von einer, insbesondere der, Vergussmasse in das Gehäuse hinein ausgebildet ist. b) Zuführen von der Vergussmasse mindestens zeitweise entgegen der Schwerkraft derart, dass die Zufuhröffnung unterhalb eines, insbesondere des, Gießspiegels der Vergussmasse ist, dass die Vergussmasse die Zellkontakte vor Kontakt mit Wasser von außerhalb des Gehäuses schützt, insbesondere zeitlich nach dem Schritt a).

Das Verfahren kann die gleichen Vorteile ermöglichen wie der zuvor beschriebene Akkupack.

Insbesondere kann der Schritt b) aufweisen: Zuführen von der Vergussmasse in einem flüssigen Zustand. Zusätzlich kann das Verfahren den Schritt aufweisen: Härten der Vergussmasse in einen festen Zustand, insbesondere zeitlich nach dem Schritt b).

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Schnittansicht eines erfindungsgemäßen Akkupacks ohne Vergussmasse und eines erfindungsgemäßen Verfahrens,
- Fig. 2: eine Schnittansicht des Akkupacks der Fig. 1 aufweisend Vergussmasse und des erfindungsgemäßen Verfahrens, und
- Fig. 3: eine Perspektivansicht eines erfindungsgemäßen Bearbeitungssystems aufweisend den Akkupack der Fig. 1 und ein elektrisch angetriebenes Bearbeitungsgerät in Form einer Säge.

### DETAILLIERTE BESCHREIBUNG DER AUSFÜHRUNGSBEISPIELE

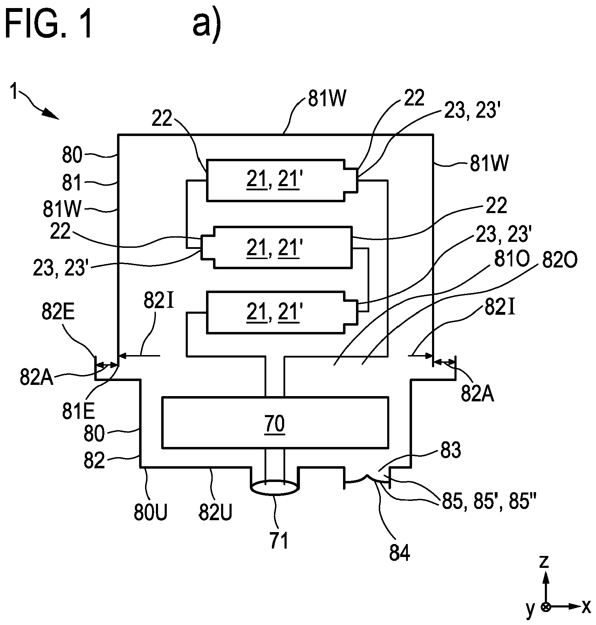

Fig. 1 bis 3 zeigen einen erfindungsgemäßen Akkupack 1 zur Versorgung eines elektrisch angetriebenen Bearbeitungsgeräts 101 mit elektrischer Antriebsleistung AL und ein erfindungsgemäßes Verfahren zur Herstellung des Akkupacks 1 zur Versorgung des elektrisch angetriebenen Bearbeitungsgeräts 101 mit elektrischer Antriebsleistung AL.

Der Akkupack 1 weist mehrere Akkumulatorzellen 21, ein Gehäuse 80 und eine Vergussmasse 90 auf. Die Akkumulatorzellen 21 weisen jeweils Zellkontakte 22 auf. Des Weiteren sind die Akkumulatorzellen 21 innerhalb des Gehäuses 80 angeordnet. Die Vergussmasse 90 schützt die Zellkontakte 22 vor Kontakt mit Wasser von außerhalb des Gehäuses 80. Das Gehäuse 80 weist ein Gehäuseoberteil 81 und ein Gehäuseunterteil 82 auf. Das Gehäuseunterteil 82 überlappt das Gehäuseoberteil 81 derart, dass das Gehäuseoberteil 81 einen Außenbereich 82A und einen Innenbereich 82I des Gehäuseunterteils 82 für die Vergussmasse 90 definiert.

Ein Gießspiegel H90A der Vergussmasse 90 in dem Außenbereich 82A ist oberhalb, insbesondere in einer vertikalen Richtung z, eines Gießspiegels H90I der Vergussmasse 90 in dem Innenbereich 82I.

Das Verfahren weist die Schritte auf:
a) Anordnen von den mehreren Akkumulatorzellen 21, wobei die Akkumulatorzellen 21 jeweils die Zellkontakte 22 aufweisen, innerhalb des Gehäuses 80, wobei das Gehäuse das Gehäuseoberteil 81 und ein das Gehäuseunterteil 82 aufweist, wobei das Gehäuseunterteil 82 das Gehäuseoberteil 81 derart überlappt, dass das Gehäuseoberteil 81 den Außenbereich 82A und den Innenbereich 82I des Gehäuseunterteils 82 für die Vergussmasse 90 definiert. b) Zuführen von der Vergussmasse 90 derart, dass der Gießspiegel H90A der Vergussmasse 90 in dem Außenbereich 82A oberhalb des Gießspiegels H90I der Vergussmasse 90 in dem Innenbereich 82I ist, dass die Vergussmasse 90 die Zellkontakte 22 vor Kontakt mit Wasser von außerhalb des Gehäuses 80 schützt.

Zusätzlich a) Anordnen von den mehreren Akkumulatorzellen 21, wobei die Akkumulatorzellen 21 jeweils die Zellkontakte 21 aufweisen, innerhalb des Gehäuses 80, wobei das Gehäuse 80 eine Zufuhröffnung 83 aufweist, wobei die Zufuhröffnung 83 zum Zuführen von der Vergussmasse 90 in das Gehäuse 80 hinein ausgebildet ist. b) Zuführen von der Vergussmasse 90 mindestens zeitweise, im gezeigten Ausführungsbeispiel die ganze Zeit, entgegen der Schwerkraft derart, dass die Zufuhröffnung 83 unterhalb, insbesondere entgegen der vertikalen Richtung z, des Gießspiegels H90I, H90A der Vergussmasse 90 ist, dass die Vergussmasse 90 die Zellkontakte 22 vor Kontakt mit Wasser von außerhalb des Gehäuses 80 schützt.

Im gezeigten Ausführungsbeispiel weist der Akkupack 1 drei Akkumulatorzellen 21 auf. In alternativen Ausführungsbeispielen kann der Akkupack zwei oder mindestens vier Akkumulatorzellen aufweisen.

Des Weiteren schützt im gezeigten Ausführungsbeispiel das Gehäuse 80, insbesondere schützt das Gehäuseoberteil 81, die Zellkontakte 22 vor Kontakt mit Wasser von außerhalb des Gehäuses 80.

Außerdem ist im gezeigten Ausführungsbeispiel die Vergussmasse 90 elektrisch isolierend.

Weiter ist im gezeigten Ausführungsbeispiel das Gehäuseoberteil 81 oberhalb, insbesondere in der vertikalen Richtung z, des Gehäuseunterteils 81 angeordnet.

Zudem überlappt im gezeigten Ausführungsbeispiel das Gehäuseunterteil 81 außen das Gehäuseoberteil 92 innen in der vertikalen Richtung z. Insbesondere weist der Außenbereich 82A eine, insbesondere geschlossene, Ringform auf.

Außerdem weist im gezeigten Ausführungsbeispiel der Schritt b) auf: Zuführen von der Vergussmasse 90 in einem flüssigen Zustand. Zusätzlich weist das Verfahren den Schritt auf: Härten der Vergussmasse 90 in einen festen Zustand.

Somit ist im gezeigten Ausführungsbeispiel das Gehäuse 80, insbesondere eine Überlappungs-, Trenn- bzw. Schnittstelle zwischen dem Gehäuseoberteil 81 und dem Gehäuseunterteil 82, durch die Vergussmasse 90 abgedichtet und das Gehäuseoberteil 81 und das Gehäuseunterteil 82 sind durch die Vergussmasse 90 miteinander mechanisch verbunden.

Zusätzlich entweicht im gezeigten Ausführungsbeispiel Luft aus dem Gehäuseunterteil 82, insbesondere dem Außenbereich 82A, nach außen, insbesondere nach oben bzw. in der vertikalen Richtung z, heraus während des Zuführens von der Vergussmasse 90 in das Gehäuse 80, insbesondere das Gehäuseunterteil 82, hinein.

Im Detail weist das Gehäuseunterteil 81 die Zufuhröffnung 83 auf. Die Zufuhröffnung 83 ist zum Zuführen von der Vergussmasse 90 in das Gehäuseunterteil 82 hinein ausgebildet.

Insbesondere ist die Zufuhröffnung 83 an einer Unterseite 80U des Gehäuses 80, insbesondere an einer Unterseite 82U des Gehäuseunterteils 82, angeordnet.

Weiter weist der Akkupack 1 mindestens einen Verschlusskörper 84 auf. Der mindestens eine Verschlusskörper 84 ist zum Verschließen der Zufuhröffnung 83 ausgebildet, insbesondere verschließt die Zufuhröffnung 83.

Im Detail weist der Akkupack 1 ein Zufuhrventil 85 auf. Das Zufuhrventil 85 weist die Zufuhröffnung 83 und den mindestens einen Verschlusskörper 84 auf.

Im gezeigten Ausführungsbeispiel ist das Zufuhrventil 85 ein selbstverschließendes Ventil 85', insbesondere ein Membranventil 85", insbesondere ein kreuzförmig geschlitztes Membranventil.

Zudem weisen die Akkumulatorzellen 21 jeweils eine Gasablassstelle 23, insbesondere ein Sicherheitsventil 23', auf. Die Gasablassstellen 23 sind, insbesondere innerhalb des Gehäuseoberteils 81, oberhalb, insbesondere in der vertikalen Richtung z, des Gießspiegels H90I, H90A der Vergussmasse 90, insbesondere in dem Innenbereich 82I, insbesondere angeordnet.

Somit sind im gezeigten Ausführungsbeispiel die Gasablassstellen 23 nicht durch die Vergussmasse 90 eingeschlossen.

Des Weiteren sind die Akkumulatorzellen 21 vollständig, insbesondere innerhalb des Gehäuseoberteils 81, oberhalb, insbesondere in der vertikalen Richtung z, des Gießspiegels H90I, H90A der Vergussmasse 90, insbesondere in dem Innenbereich 82I.

Somit sind im gezeigten Ausführungsbeispiel die Akkumulatorzellen 21 nicht durch die Vergussmasse 90 eingeschlossen.

Außerdem sind die Akkumulatorzellen 21, insbesondere längliche, Rundzellen 21'.

In alternativen Ausführungsbeispielen können die Akkumulatorzellen Pouchzellen sein und die Zellkontakte können Zelltabs sein.

Im gezeigten Ausführungsbeispiel weist ein Zellkontakt 22 einer jeweiligen der Rundzellen 21' die Gasablassstelle 23 auf.

Weiter sind im gezeigten Ausführungsbeispiel die Rundzellen 21' jeweils mit einer Rundzellenlängsachse in einer zu der vertikalen Richtung z orthogonalen horizontalen Richtung x angeordnet.

Zudem sind im gezeigten Ausführungsbeispiel die Akkumulatorzellen 21, insbesondere die Rundzellen 21', seriell geschaltet, insbesondere in der vertikalen Richtung z.

Des Weiteren ist das Gehäuseoberteil 81, insbesondere eine Wand 81W des Gehäuseoberteils 81, gasdicht.

Somit kann im gezeigten Ausführungsbeispiel Luft aus dem Gehäuseoberteil 81 nach außen, insbesondere nach oben bzw. in der vertikalen Richtung z, heraus während des Zuführens von der Vergussmasse 90 in das Gehäuse 80, insbesondere das Gehäuseunterteil 82, hinein nicht entweichen.

Außerdem ist eine Öffnung 81O des Gehäuseoberteils 81 dem Gehäuseunterteil 82 zugewandt, insbesondere nach unten.

Zusätzlich ist eine Öffnung 82O des Gehäuseunterteils 82 dem Gehäuseoberteil 81 zugewandt, insbesondere nach oben.

Zusätzlich sind das Gehäuseoberteil 81 und das Gehäuseunterteil 82 durcheinander verschlossen.

Zusätzlich reicht die Vergussmasse 90 in dem Innenbereich 82I bis zu einem dem Gehäuseunterteil 82 benachbarten Ende 81E des Gehäuseoberteils 81 hin, insbesondere nach oben bzw. in der vertikalen Richtung z.

Zusätzlich reicht die Vergussmasse 90 in dem Außenbereich 82A bis oberhalb des benachbarten Endes 81E des Gehäuseoberteils 81 hin, insbesondere bis zu einem dem Gehäuseoberteil 81 benachbarten Ende 82E des Gehäuseunterteils 82, insbesondere nach oben bzw. in der vertikalen Richtung z.

Im gezeigten Ausführungsbeispiel weist das Gehäuseoberteil 81 eine Glockenform auf. Die Öffnung 81O des Gehäuseoberteils 81 ist eine Glockenöffnung.

Weiter weist im gezeigten Ausführungsbeispiel das Gehäuseunterteil 82 eine Becherform auf. Die Öffnung 82O des Gehäuseunterteils 82 ist eine Becheröffnung.

Zudem ist im gezeigten Ausführungsbeispiel im Schritt b), und insbesondere während des Härtens, das Gehäuseoberteil 81 mit der Öffnung 81O nach unten ausgerichtet, insbesondere dass die Vergussmasse 90 nicht in dem Gehäuseoberteil 81 entgegen der Schwerkraft bzw. von unten nach oben bzw. in der vertikalen Richtung z, aufsteigen kann.

Des Weiteren ist im gezeigten Ausführungsbeispiel im Schritt b), und insbesondere während des Härtens, das Gehäuseunterteil 82 mit der Öffnung 82O nach oben ausgerichtet, insbesondere dass die Vergussmasse 90 in dem flüssigen Zustand nicht aus dem Gehäuseunterteil 82 herausfließen kann.

Außerdem bildet die Vergussmasse 90 in dem Außenbereich 82A und in dem Innenbereich 82I einen Vergussblock 91.

Weiter weist der Akkupack 1 eine Mess- und/oder Leistungselektronik 70 auf. Die Mess- und/oder Leistungselektronik 70 ist mit mehreren der Zellkontakte 22 elektrisch verbunden. Zudem ist die Mess- und/oder Leistungselektronik 70 innerhalb des Gehäuses 80, insbesondere des Gehäuseunterteils 82, unterhalb, insbesondere entgegen der vertikalen Richtung z, des Gießspiegels H90I, H90A der Vergussmasse 90.

Somit ist im gezeigten Ausführungsbeispiel die Mess- und/oder Leistungselektronik 70 durch die Vergussmasse 90 eingeschlossen.

Des Weiteren weist der Akkupack 1 mehrere Akkupackkontakte 71 auf. Die Akkupackkontakte 71 sind zur elektrischen Verbindung des Akkupacks 1 und des Bearbeitungsgeräts 101 miteinander zur Versorgung des Bearbeitungsgeräts 101 mit der elektrischen Antriebsleistung AL von dem Akkupack 1 ausgebildet. Außerdem sind die Akkupackkontakte 71 unterhalb, insbesondere entgegen der vertikalen Richtung z, des Gießspiegels H90I, H90A der Vergussmasse 90 angeordnet.

Im gezeigten Ausführungsbeispiel sind die Akkupackkontakte 71 an der Unterseite 80U des Gehäuses 80, insbesondere an der Unterseite 82U des Gehäuseunterteils 82, angeordnet.

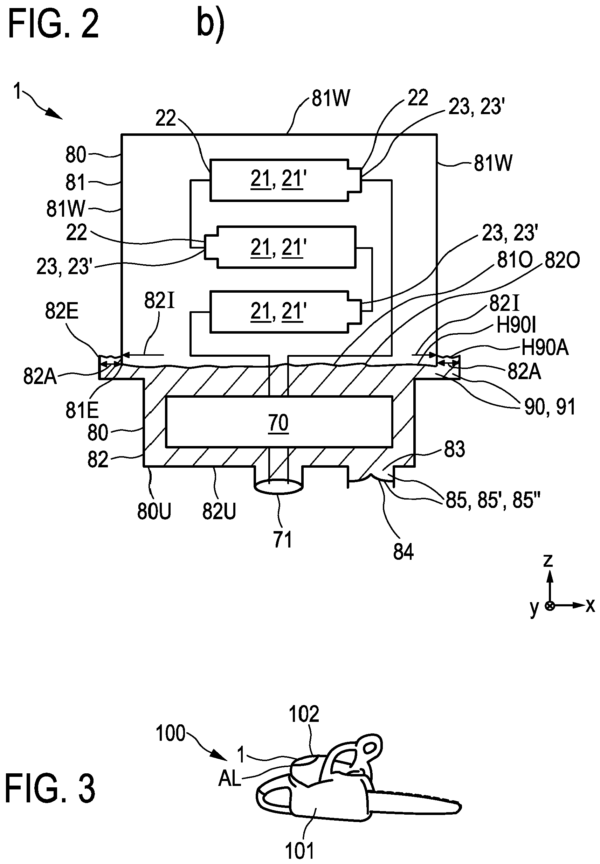

Fig. 3 zeigt ein erfindungsgemäßes Bearbeitungssystem 100. Das Bearbeitungssystem 100 weist den Akkupack 1 und ein elektrisch angetriebenes Bearbeitungsgerät 101 auf. Der Akkupack 1 und das Bearbeitungsgerät 101 sind zur elektrischen Verbindung miteinander zur Versorgung des Bearbeitungsgeräts 101 mit elektrischer Antriebsleistung AL von dem Akkupack 1 ausgebildet, insbesondere elektrisch verbunden.

Im Detail weist das Bearbeitungsgerät 101 eine Akkuaufnahme 102 auf. Die Akkuaufnahme 102 ist zum Aufnehmen des Akkupacks 1 ausgebildet. Insbesondere ist der Akkupack 1 aufgenommen.

In Fig. 3 ist das elektrisch angetriebene Bearbeitungsgerät 101 eine Säge. In alternativen Ausführungsbeispielen kann das Bearbeitungsgerät ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere sein.

Wie die gezeigten und oben erläuterten Ausführungsbeispiele deutlich machen, stellt die Erfindung einen Akkupack zur Versorgung eines elektrisch angetriebenen Bearbeitungsgeräts mit elektrischer Antriebsleistung, ein Bearbeitungssystem aufweisend einen solchen Akkupack und ein elektrisch angetriebenes Bearbeitungsgerät und ein Verfahren zur Herstellung eines Akkupacks zur Versorgung eines elektrisch angetriebenen Bearbeitungsgeräts mit elektrischer Antriebsleistung, wobei der Akkupack und das Verfahren jeweils verbesserte Eigenschaften aufweisen, bereit.

## Patentansprüche

1. Akkupack (1) zur Versorgung eines elektrisch angetriebenen Bearbeitungsgeräts (101) mit elektrischer Antriebsleistung (AL), wobei der Akkupack (1) aufweist:
- mehrere Akkumulatorzellen (21), wobei die Akkumulatorzellen (21) jeweils Zellkontakte (22) aufweisen,
- ein Gehäuse (80), wobei die Akkumulatorzellen (21) innerhalb des Gehäuses (80) angeordnet sind, und
- eine Vergussmasse (90), wobei die Vergussmasse (90) die Zellkontakte (22) vor Kontakt mit Wasser von außerhalb des Gehäuses (80) schützt,
- **dadurch gekennzeichnet,**
- **dass** das Gehäuse (80) ein Gehäuseoberteil (81) und ein Gehäuseunterteil (82) aufweist, wobei das Gehäuseunterteil (82) das Gehäuseoberteil (81) derart überlappt, dass das Gehäuseoberteil (81) einen Außenbereich (82A) und einen Innenbereich (82I) des Gehäuseunterteils (82) für die Vergussmasse (90) definiert, wobei ein Gießspiegel (H90A) der Vergussmasse (90) in dem Außenbereich (82A) oberhalb eines Gießspiegels (H90I) der Vergussmasse (90) in dem Innenbereich (82I) ist.

2. Akkupack (1) nach Anspruch 1, **dadurch gekennzeichnet,**
- **dass** das Gehäuse (80) eine Zufuhröffnung (83) aufweist, wobei die Zufuhröffnung (83) zum Zuführen von der Vergussmasse (90) in das Gehäuse (80) hinein ausgebildet ist und wobei die Zufuhröffnung (83) unterhalb des Gießspiegels (H90I, H90A) der Vergussmasse (90) ist.

3. Akkupack (1) nach Anspruch 2, **dadurch gekennzeichnet,**
- **dass** die Zufuhröffnung (83) an einer Unterseite (80U) des Gehäuses (80) angeordnet ist.

4. Akkupack (1) nach Anspruch 2 oder 3, **dadurch gekennzeichnet,**
- **dass** der Akkupack (1) mindestens einen Verschlusskörper (84) aufweist, wobei der mindestens eine Verschlusskörper (84) zum Verschließen der Zufuhröffnung (83) ausgebildet ist.

5. Akkupack (1) nach Anspruch 4, **dadurch gekennzeichnet,**
- **dass** der Akkupack (1) ein Zufuhrventil (85) aufweist, wobei das Zufuhrventil (85) die Zufuhröffnung (83) und den mindestens einen Verschlusskörper (84) aufweist.

6. Akkupack (1) nach einem der vorhergehenden Ansprüche, **dadurch gekennzeichnet,**
- **dass** die Akkumulatorzellen (21) jeweils eine Gasablassstelle (23) aufweisen, wobei die Gasablassstellen (23) oberhalb des Gießspiegels (H90I, H90A) der Vergussmasse (90) sind.

7. Akkupack (1) nach einem der vorhergehenden Ansprüche, **dadurch gekennzeichnet,**
- **dass** die Akkumulatorzellen (21) vollständig oberhalb des Gießspiegels (H90I, H90A) der Vergussmasse (90) sind.

8. Akkupack (1) nach einem der vorhergehenden Ansprüche, **dadurch gekennzeichnet,**
- **dass** die Akkumulatorzellen (21) Rundzellen (21') sind.

9. Akkupack (1) nach einem der vorhergehenden Ansprüche, **dadurch gekennzeichnet,**
- **dass** das Gehäuseoberteil (81) gasdicht ist.

10. Akkupack (1) nach einem der vorhergehenden Ansprüche, **dadurch gekennzeichnet,**
- **dass** eine Öffnung (81O) des Gehäuseoberteils (81) dem Gehäuseunterteil (82) zugewandt ist, und/oder
- **dass** eine Öffnung (82O) des Gehäuseunterteils (82) dem Gehäuseoberteil (81) zugewandt ist, und/oder
- **dass** das Gehäuseoberteil (81) und das Gehäuseunterteil (82) durcheinander verschlossen sind, und/oder
- **dass** die Vergussmasse (90) in dem Innenbereich (82I) bis zu einem dem Gehäuseunterteil (82) benachbarten Ende (81E) des Gehäuseoberteils (81) hinreicht, und/oder
- **dass** die Vergussmasse (85) in dem Außenbereich (82A) bis oberhalb eines dem Gehäuseunterteil (82) benachbarten Endes (81E) des Gehäuseoberteils (81) reicht.

11. Akkupack (1) nach einem der vorhergehenden Ansprüche, **dadurch gekennzeichnet,**
- **dass** die Vergussmasse (90) in dem Außenbereich (82A) und in dem Innenbereich (82I) einen Vergussblock (91) bildet.

12. Akkupack (1) nach einem der vorhergehenden Ansprüche, **dadurch gekennzeichnet,**
- **dass** der Akkupack (1) eine Mess- und/oder Leistungselektronik (70) aufweist, wobei die Mess- und/oder Leistungselektronik (70) mit mehreren der Zellkontakte (22) elektrisch verbunden ist, wobei die Mess- und/oder Leistungselektronik (70) innerhalb des Gehäuses (80) unterhalb des Gießspiegels (H90I, H90A) der Vergussmasse (90) ist.

13. Akkupack (1) nach einem der vorhergehenden Ansprüche, **dadurch gekennzeichnet,**
- **dass** der Akkupack (1) mehrere Akkupackkontakte (71) aufweist, wobei die Akkupackkontakte (71) zur elektrischen Verbindung des Akkupacks (1) und des Bearbeitungsgeräts (101) miteinander zur Versorgung des Bearbeitungsgeräts (101) mit der elektrischen Antriebsleistung (AL) von dem Akkupack (1) ausgebildet und unterhalb des Gießspiegels (H90I, H90A) der Vergussmasse (90) angeordnet sind.

14. Bearbeitungssystem (100), wobei das Bearbeitungssystem (100) aufweist:
- einen Akkupack (1) nach einem der vorhergehenden Ansprüche, und
- ein elektrisch angetriebenes Bearbeitungsgerät (101),
- wobei der Akkupack (1) und das Bearbeitungsgerät (101) zur elektrischen Verbindung miteinander zur Versorgung des Bearbeitungsgeräts (101) mit elektrischer Antriebsleistung (AL) von dem Akkupack (1) ausgebildet sind.

15. Verfahren zur Herstellung eines Akkupacks (1), insbesondere nach einem der Ansprüche 1 bis 13, zur Versorgung eines elektrisch angetriebenen Bearbeitungsgeräts (101) mit elektrischer Antriebsleistung (AL), wobei das Verfahren die Schritte aufweist:
a) Anordnen von mehreren Akkumulatorzellen (21), wobei die Akkumulatorzellen (21) jeweils Zellkontakte (22) aufweisen, innerhalb eines Gehäuses (80), wobei das Gehäuse (80) ein Gehäuseoberteil (81) und ein Gehäuseunterteil (82) aufweist, wobei das Gehäuseunterteil (82) das Gehäuseoberteil (81) derart überlappt, dass das Gehäuseoberteil (81) einen Außenbereich (82A) und einen Innenbereich (82I) des Gehäuseunterteils (82) für eine Vergussmasse (90) definiert, und
b) Zuführen von der Vergussmasse (90) derart, dass ein Gießspiegel (H90A) der Vergussmasse (90) in dem Außenbereich (82A) oberhalb eines Gießspiegels (H90I) der Vergussmasse (90) in dem Innenbereich (82I) ist, dass die Vergussmasse (90) die Zellkontakte (22) vor Kontakt mit Wasser von außerhalb des Gehäuses (80) schützt, und/oder
a) Anordnen von mehreren Akkumulatorzellen (21), wobei die Akkumulatorzellen (21) jeweils Zellkontakte (22) aufweisen, innerhalb eines Gehäuses (80), wobei das Gehäuse (80) eine Zufuhröffnung (83) aufweist, wobei die Zufuhröffnung (83) zum Zuführen von einer Vergussmasse (90) in das Gehäuse (80) hinein ausgebildet ist, und
b) Zuführen von der Vergussmasse (90) mindestens zeitweise entgegen der Schwerkraft derart, dass die Zufuhröffnung (83) unterhalb eines Gießspiegels (H90I, H90A) der Vergussmasse (90) ist, dass die Vergussmasse (90) die Zellkontakte (22) vor Kontakt mit Wasser von außerhalb des Gehäuses (80) schützt.
